# EUROPÄISCHE PATENTSCHRIFT

(11) **EP 3 218 623 B1**
(45) Veröffentlichungstag und Bekanntmachung des Hinweises auf die Patenterteilung: **18.03.2020**
(21) Anmeldenummer: 15791651.1
(22) Anmeldetag: 10.11.2015
(51) Int. Cl.: F16J 15/3236

(54) **DICHTUNGSANORDNUNG**
SEALING ARRANGEMENT
SYSTÈME D'ÉTANCHÉITÉ

(30) Priorität: 13.11.2014 DE 102014223162
(43) Veröffentlichungstag der Anmeldung: 20.09.2017
(73) Patentinhaber: ElringKlinger AG, 72581 Dettingen (DE)
(72) Erfinder: SCHUHMACHER, Walter, 74321 Bietigheim-Bissingen (DE); HOCKER, Klaus, 74379 Ingersheim (DE)
(74) Vertreter: Hoeger, Stellrecht & Partner Patentanwälte mbB
(86) Internationale Anmeldenummer: PCT/EP2015/076258
(87) Internationale Veröffentlichungsnummer: WO 2016/075168

(56) Entgegenhaltungen:
- WO-A1-2008/061581
- FR-A1- 2 328 143
- US-A1- 2006 103 075

## Beschreibung

Die vorliegende Erfindung betrifft eine Dichtungsanordnung zum Abdichten zwischen einem mit einem ersten Medium gefüllten ersten Medienraum und einem mit einem zweiten Medium gefüllten zweiten Medienraum im Bereich eines beweglichen Bauteils.

Eine solche Dichtungsanordnung ist beispielsweise aus der WO 2008/061581 A1 und aus der FR 2 328 143 A1 bekannt.

Der vorliegenden Erfindung liegt die Aufgabe zugrunde, eine Dichtungsanordnung bereitzustellen, welche einfach herstellbar ist und eine geringe Leckage aufweist.

Diese Aufgabe wird erfindungsgemäß durch eine Dichtungsanordnung mit den Merkmalen des Anspruchs 1 gelöst.

Bei der erfindungsgemäßen Dichtungsanordnung ist somit zwischen zwei Dichtlippen aufgrund der konkaven Einbuchtung ein vergrößerter Leckage-Speicherraum gebildet, so dass im Benutzungszustand der Dichtungsanordnung zwischen zwei Dichtlippen eine größere Menge, insbesondere ein größeres Volumen, eines abzudichtenden Mediums aufnehmbar ist. Ein unerwünschtes Durchschleppen des Mediums durch beide Dichtlippen kann hierdurch vorzugsweise minimiert werden.

Günstig kann es sein, wenn eine oder beide der einander zugewandt angeordneten Begrenzungsflächen der Dichtlippen Kegelstumpfmantelflächen sind.

Vorzugsweise sind sämtliche Begrenzungsflächen sämtlicher Dichtlippen der Dichtungsanordnung Kegelstumpfmantelflächen.

Vorteilhaft kann es sein, wenn zwei einander zugewandt angeordnete Begrenzungsflächen der Dichtlippen Kegelstumpfmantelflächen von gegenseitig sich aufeinander zu erweiternden Kegelstümpfen sind.

Vorzugsweise weisen die Kegelstümpfe voneinander verschiedene Öffnungswinkel auf.

Bei einer Ausgestaltung der Erfindung kann vorgesehen sein, dass die einander zugewandt angeordneten Begrenzungsflächen voneinander verschiedene Winkel mit einer Oberfläche des beweglichen Bauteils und/oder mit der Längsachse einschließen.

Insbesondere kann vorgesehen sein, dass ein Winkel zwischen der Oberfläche des beweglichen Bauteils und/oder der Längsachse einerseits und einer der beiden einander zugewandt angeordneten Begrenzungsflächen andererseits sich von einem Winkel unterscheidet, welcher von der Oberfläche des beweglichen Bauteils und/oder der Längsachse einerseits und der weiteren Begrenzungsfläche der einander zugewandt angeordneten Begrenzungsflächen eingeschlossen ist.

Vorteilhaft kann es sein, wenn eine axial innere Begrenzungsfläche einer axial äußeren Dichtlippe einen kleineren Winkel mit der Längsachse einschließt als eine axial äußere Begrenzungsfläche einer axial inneren Dichtlippe.

Unter einer axial inneren Begrenzungsfläche oder axial inneren Dichtlippe ist in dieser Beschreibung und den beigefügten Ansprüchen eine Ausgestaltung der Dichtungsanordnung derart zu verstehen, dass diese Begrenzungsfläche bzw. Dichtlippe bezüglich einer Längsachse des beweglichen Bauteils und/oder der gesamten Dichtungsanordnung näher an einer senkrecht zur Längsachse genommenen Quermittelebene der Dichtungsanordnung liegt als eine axial äußere Begrenzungsfläche bzw. eine axial äußere Dichtlippe.

Jede Dichtlippe weist vorzugsweise eine axial innere Begrenzungsfläche und eine axial äußere Begrenzungsfläche auf.

Die beiden Begrenzungsflächen einer Dichtlippe grenzen an einer Dichtkante der Dichtlippe aneinander an. Die Dichtkante der Dichtlippe liegt im Benutzungszustand der Dichtungsanordnung vorzugsweise an dem beweglichen Bauteil an.

Vorzugsweise ist vorgesehen, dass eine axial innere Begrenzungsfläche einer axial äußeren Dichtlippe eines dynamischen Dichtabschnitts der Dichtungsanordnung einen kleineren Winkel mit der Längsachse einschließt als eine axial äußere Begrenzungsfläche einer axial inneren Dichtlippe desselben dynamischen Dichtabschnitts.

Ferner kann vorgesehen sein, dass eine axial innere Begrenzungsfläche einer Dichtlippe einen kleineren Winkel mit der Längsachse einschließt als eine axial äußere Begrenzungsfläche derselben Dichtlippe. Die axial äußere Begrenzungsfläche kann dann insbesondere als "Abstreif" dienen, während die axial innere Begrenzungsfläche vorzugsweise eine vereinfachte Rückförderung von unterhalb der Dichtlippe hindurchgeschlepptem Medium zurück in den zugehörigen Medienraum ermöglicht.

Günstig kann es sein, wenn die konkave Einbuchtung in mindestens einer oder zwischen den mindestens zwei Begrenzungsflächen der Dichtlippen im Wesentlichen ringförmig ausgebildet ist.

Vorteilhaft kann es sein, wenn die Einbuchtung im Wesentlichen rotationssymmetrisch um die Längsachse des beweglichen Bauteils und/oder der Dichtungsanordnung ausgebildet ist.

Die Längsachse des beweglichen Bauteils ist vorzugsweise zugleich die Längsachse der Dichtungsanordnung.

Günstig kann es sein, wenn die Dichtungsanordnung mehrere Leckage-Speicherräume mit unterschiedlichen Volumina umfasst.

Insbesondere kann vorgesehen sein, dass die Dichtungsanordnung mehrere Leckage-Speicherräume umfasst, welche unterschiedlich dimensionierte Einbuchtungen aufweisen.

Das Dichtelement der Dichtungsanordnung ist vorzugsweise einstückig ausgebildet.

Vorteilhaft kann es sein, wenn das Dichtelement ein Kunststoffmaterial umfasst, beispielsweise aus einem PTFE-Material gebildet ist. Das Dichtelement kann beispielsweise aus einem Polytetrafluorethylen-Compound oder aus einem modifizierten Polytetrafluorethylen-Compound oder aus einem, insbesondere spritzgießbaren, Fluorthermoplasten oder aus einem, insbesondere spritzgießbaren, Fluorthermoplast-Compound gebildet sein.

Vorteilhaft kann es sein, wenn mindestens ein dynamischer Dichtabschnitt des Dichtelements mindestens einen Leckage-Speicherraum aufweist, welcher zwischen zwei zueinander benachbarten Dichtlippen des dynamischen Dichtabschnitts ausgebildet ist.

Die Dichtungsanordnung eignet sich insbesondere zur Verwendung in einer Hochdruckpumpe.

Die Dichtungsanordnung dient dann vorzugsweise zur Abdichtung eines Kolbens der Hochdruckpumpe.

Günstig kann es sein, wenn die Dichtungsanordnung zur Abdichtung des Kolbens einer Hochdruckpumpe für die Direkteinspritzung von Treibstoff, beispielsweise Benzin, in die Zylinder eines Verbrennungsmotors verwendet wird. Vorzugsweise kann mittels eines ersten dynamischen Dichtabschnitts eine Kraftstoffseite (Benzinseite) und/oder mittels eines zweiten dynamischen Dichtabschnitts eine Motorölseite abgedichtet werden.

Der erste dynamische Dichtabschnitt und der zweite dynamische Dichtabschnitt sind vorzugsweise voneinander verschiedene Dichtabschnitte der Dichtungsanordnung.

Ein zwischen den beiden dynamischen Dichtabschnitten angeordneter Bereich der Dichtungsanordnung wird im Betrieb der Dichtungsanordnung vorzugsweise möglichst geringfügig mit den abzudichtenden Medien, insbesondere Kraftstoff und/oder Motoröl, beaufschlagt.

Die vorliegende Erfindung betrifft vorzugsweise eine Hochdruckpumpe, welche eine oder mehrere der erfindungsgemäßen Dichtungsanordnungen umfasst.

Ferner betrifft die vorliegende Erfindung die Verwendung einer Hochdruckpumpe, insbesondere einer erfindungsgemäßen Hochdruckpumpe, zum Einspritzen von Kraftstoff in einen Verbrennungsmotor.

Ferner betrifft die vorliegende Erfindung die Verwendung einer Dichtungsanordnung, insbesondere einer erfindungsgemäßen Dichtungsanordnung, zum Abdichten zwischen einem mit einem ersten Medium gefüllten ersten Medienraum und einem mit einem zweiten Medium gefüllten zweiten Medienraum im Bereich eines beweglichen Bauteils, wobei ein Volumen eines Leckage-Speicherraums eines dynamischen Dichtabschnitts der Dichtungsanordnung und mindestens ein mittels des dynamischen Dichtabschnitts abzudichtendes Medium so gewählt sind oder werden, dass das Volumen des Leckage-Speicherraums größer ist als ein Volumen des Mediums, wobei das Volumen des Mediums gebildet ist durch einen Hub des beweglichen Bauteils multipliziert mit einer Querschnittsfläche eines mittels des Mediums an dem beweglichen Bauteil gebildeten Schmierfilms.

Unter einem Hub des beweglichen Bauteils ist in dieser Beschreibung und den beigefügten Ansprüchen eine Bewegungsstrecke in Längsrichtung (längs der Längsachse) zu verstehen, welche das Bauteil, insbesondere periodisch, zurücklegt.

Die Querschnittsfläche des Schmierfilms ist insbesondere eine senkrecht zur Längsachse genommene Querschnittsfläche.

Ein Schmierfilm des Mediums ist insbesondere ein Leckage-Film des Mediums, welcher insbesondere unter einer axial äußeren Dichtlippe eines dynamischen Dichtabschnitts in axialer Richtung nach innen gerichtet hindurchgeschleppt wird.

Vorzugsweise umfasst die Dichtungsanordnung ein oder mehrere Federelemente, mittels welchen der eine oder die mehreren dynamischen Dichtabschnitte gegen das bewegliche Bauteil, insbesondere eine Kolbenlauffläche des beweglichen Bauteils, vorgespannt oder vorspannbar sind.

Das erste und/oder das zweite Medium ist vorzugsweise eine Flüssigkeit.

Insbesondere können das erste Medium und das zweite Medium voneinander verschiedene Flüssigkeiten sein.

Erfindungsgemäß ist vorgesehen, dass beide dynamischen Dichtabschnitte jeweils mindestens zwei Dichtlippen aufweisen.

Eine noch bessere Abdichtwirkung wird erzielt, wenn mindestens einer der dynamischen Dichtabschnitte mindestens drei Dichtlippen aufweist.

Besonders günstig zur Erzielung geringer Leckage-Werte ist es, wenn beide dynamischen Dichtabschnitte jeweils mindestens drei Dichtlippen aufweisen.

Das Dichtelement ist vorzugsweise ringförmig und insbesondere rotationssymmetrisch bezüglich der Längsrichtung des beweglichen Bauteils ausgebildet.

Damit das Dichtelement sowohl in einer Ausgangsstellung als auch in einer um 180° gegenüber der Ausgangsstellung gedrehten Stellung in die Dichtungsanordnung eingesetzt werden kann, ist vorzugsweise vorgesehen, dass das Dichtelement im Wesentlichen spiegelsymmetrisch bezüglich einer senkrecht zur Längsrichtung des beweglichen Bauteils verlaufenden Quermittelebene des Dichtelements ausgebildet ist. Auf diese Weise wird die Montage der Dichtungsanordnung wesentlich vereinfacht.

Bei einer bevorzugten Ausgestaltung der erfindungsgemäßen Dichtungsanordnung ist vorgesehen, dass der erste Abdichtbereich einen radial auswärts von dem ersten dynamischen Dichtabschnitt angeordneten ersten statischen Dichtabschnitt umfasst.

Ferner ist vorzugsweise vorgesehen, dass der zweite Abdichtbereich einen radial auswärts von dem zweiten dynamischen Dichtabschnitt angeordneten zweiten statischen Dichtabschnitt umfasst.

Der erste statische Dichtabschnitt und der zweite statische Dichtabschnitt liegen vorzugsweise abdichtend an einem Dichtungsträger, in welchen das Dichtelement eingesetzt ist, an.

Die statischen Dichtabschnitte können in axialer Richtung des Dichtelements, d.h. in der parallel zur Längsrichtung des beweglichen Bauteils verlaufenden Richtung, im Wesentlichen dieselbe Ausdehnung aufweisen wie die zugehörigen dynamischen Dichtabschnitte. Insbesondere können die axialen Enden der statischen Dichtabschnitte denselben Abstand von einer Quermittelebene des Dichtelements aufweisen wie die axialen Enden der dynamischen Dichtabschnitte.

Alternativ dazu kann aber auch vorgesehen sein, dass mindestens ein statischer Dichtabschnitt in axialer Richtung über den zugehörigen dynamischen Dichtabschnitt desselben Abdichtbereiches übersteht. Auf diese Weise kann erreicht werden, dass sich das Dichtelement nur über den betreffenden statischen Dichtabschnitt an einem Dichtungsträger, in welchen das Dichtelement eingesetzt wird, abstützt und dass beim Einpressen des Dichtelements in den Dichtungsträger der zugehörige dynamische Dichtabschnitt nicht belastet wird.

Mindestens ein statischer Dichtabschnitt des Dichtelements kann sich in axialer Richtung an einem Dichtungsträger oder an einem anderen Bauelement der Dichtungsanordnung abstützen.

Das Dichtelement der erfindungsgemäßen Dichtungsanordnung umfasst vorteilhafterweise ein Fluorpolymer-Material.

Insbesondere kann vorgesehen sein, dass das Dichtelement ein Polytetrafluorethylen (PTFE) oder ein modifiziertes Polytetrafluorethylen umfasst.

Dabei ist unter einem "modifizierten Polytetrafluorethylen" ein PTFE-ähnlicher Stoff zu verstehen, bei welchem die Molekülstruktur des PTFE dadurch chemisch modifiziert worden ist, dass neben Tetrafluorethylen noch ein weiteres, ebenfalls perfluoriertes Monomer in die Molekülkette eingebaut wurde, so dass die Fluoratome des PTFE teilweise durch Substituenten ersetzt sind.

Die chemische Zusammensetzung und Herstellung von "modifiziertem PTFE" sind beispielsweise in der EP 0 041 687 A1, der EP 0 931 798 A1 oder der US-Patentschrift Nr. 6,013,700 beschrieben.

Solche PTFE-haltigen Werkstoffe weisen eine besonders gute Temperatur- und Chemikalienbeständigkeit sowie gute Trockenlaufeigenschaften auf.

Das Dichtelement kann aus Polytetrafluorethylen oder aus einem modifizierten Polytetrafluorethylen bestehen.

Alternativ hierzu kann auch vorgesehen sein, dass das Dichtelement aus einem Polytetrafluorethylen-Compound oder aus einem modifizierten Polytetrafluorethylen-Compound gebildet ist, d.h. aus einer Mischung eines Polytetrafluorethylens oder eines modifizierten Polytetrafluorethylens mit einem oder mehreren organischen oder anorganischen Füllstoffen.

Um bei einer Hubbewegung des beweglichen Bauteils an einer Dichtlippe des Dichtelements vorbei gelangtes Leckage-Medium zwischenspeichern und bei einem Rückhub des beweglichen Bauteils wieder auf die richtige Medienseite zurückfördern zu können, ist es von Vorteil, wenn mindestens ein dynamischer Dichtabschnitt des Dichtelements mindestens einen Leckage-Speicherraum aufweist, der zwischen zwei benachbarten Dichtlippen des betreffenden dynamischen Dichtabschnitts ausgebildet ist.

Ein solcher Leckage-Speicherraum ist vorzugsweise ringförmig ausgebildet.

Besonders günstig ist es, wenn mindestens ein dynamischer Dichtabschnitt des Dichtelements mehrere, in der Längsrichtung des beweglichen Bauteils aufeinanderfolgende Leckage-Speicherräume aufweist.

Dabei können die Leckage-Speicherräume eines dynamischen Dichtabschnitts alle im Wesentlichen gleich groß sein.

Alternativ hierzu kann aber auch vorgesehen sein, dass die Leckage-Speicherräume des dynamischen Dichtabschnitts unterschiedliche Größen aufweisen, um dem Umstand Rechnung zu tragen, dass die Leckage-Menge von den axialen Enden des Dichtelements zur Mitte des Dichtelements hin abnimmt, da die Leckage-Medien eine zunehmende Anzahl von Dichtlippen passieren müssen, um näher zur Mitte des Dichtelements zu gelangen.

Unterschiedlich große Leckage-Speicherräume können beispielsweise dadurch erzeugt werden, dass die Dichtlippen, welche die Leckage-Speicherräume begrenzen, im Herstellungszustand des Dichtelements unterschiedliche Innendurchmesser aufweisen. Bei der Montage der Dichtungsanordnung werden diese Dichtlippen dann so verformt, dass sie einen dem Außendurchmesser des beweglichen Bauteils entsprechenden Innendurchmesser aufweisen, damit die Dichtlippen im Betrieb der Dichtungsanordnung abdichtend an der Dichtfläche des beweglichen Bauteils anliegen.

Vorzugsweise ist vorgesehen, dass die Größe der Leckage-Speicherräume mit wachsendem Abstand von einem medienraumseitigen axialen Ende des Dichtelements abnimmt.

Dies kann insbesondere dadurch erreicht werden, dass der Innendurchmesser der Dichtlippen, welche die Leckage-Speicherräume begrenzen, im Herstellungszustand des Dichtelements mit wachsendem Abstand von einem medienraumseitigen Ende des Dichtelements zunimmt.

Mindestens eine Dichtlippe des Dichtelements ist vorzugsweise so ausgestaltet, dass sie zwei Begrenzungsflächen aufweist, die unter unterschiedlichen Winkeln gegen eine senkrecht zur Längsrichtung des beweglichen Bauteils verlaufende Ebene geneigt sind.

Dabei ist vorzugsweise diejenige Begrenzungsfläche, die zu dem nächstliegenden medienraumseitigen Ende des Dichtelements hinweist, unter einem kleineren Winkel gegen die senkrecht zur Längsrichtung des beweglichen Bauteils verlaufende Ebene geneigt als diejenige Begrenzungsfläche, welche in die dem nächstliegenden medienraumseitigen Ende des Dichtelements abgewandte Richtung weist. Durch diese Gestaltung der Dichtlippe wird erreicht, dass das Leckage-Medium die Dichtlippe nur schwer in der Richtung von einem medienraumseitigen Ende des Dichtelements weg überwinden kann, aber leicht in der Gegenrichtung zu einem medienraumseitigen Ende des Dichtelements hin zurückgeschleppt werden kann.

Die Dichtlippen des Dichtelements der erfindungsgemäßen Dichtungsanordnung können scharf begrenzte, nur längs einer Linie an einer Dichtfläche des beweglichen Bauteils anliegende Dichtkanten aufweisen.

Alternativ hierzu kann auch vorgesehen sein, dass mindestens ein dynamischer Dichtabschnitt des Dichtelements mindestens eine abgeflachte Dichtlippe aufweist, die sich mit einer im Wesentlichen parallel zur Längsrichtung des beweglichen Bauteils ausgerichteten Abstützfläche im montierten Zustand der Dichtungsanordnung an dem beweglichen Bauteil abstützt. Durch diese im Vergleich zu einer scharfen Dichtkante größere Abstützfläche wird die spezifische Flächenpressung an der betreffenden Dichtlippe vermindert und der Traganteil der Dichtlippe im Neuzustand erhöht, wodurch der Dichtlippenverschleiß reduziert und die Lebensdauer des Dichtelements verlängert wird.

Der Dichtlippenverschleiß wird durch die abgeflachte Form der Dichtlippe insbesondere dann verringert, wenn eines der an dem Dichtelement anliegenden Medien Verschmutzungspartikel enthält (beispielsweise im Fall eines verschmutzten Öls).

Um Schmutzpartikel aus mindestens einem der beiden Medienräume, beispielsweise aus einem mit Motoröl gefüllten Medienraum, von den Dichtlippen des Dichtelements fernzuhalten, ist es günstig, wenn mindestens ein dynamischer Dichtabschnitt des Dichtelements zusätzlich zu den Dichtlippen eine Abstreiflippe aufweist.

Insbesondere kann vorgesehen sein, dass die Abstreiflippe in axialer Richtung über einen statischen Dichtabschnitt desselben Abdichtbereiches des Dichtelements übersteht.

Das Dichtelement kann symmetrisch ausgestaltet sein, wenn beide dynamischen Dichtabschnitte des Dichtelements zusätzlich zu den Dichtlippen jeweils eine Abstreiflippe aufweisen. In diesem Fall kommt es auf die Orientierung des Dichtelements relativ zu dem beweglichen Bauteil nicht an, so dass das Dichtelement in zwei um 180° gegeneinander verdrehten Positionen montiert werden kann, was die Montage der erfindungsgemäßen Dichtungsanordnung vereinfacht.

Der mittlere Differenzdruck zwischen dem ersten Medienraum und dem zweiten Medienraum beträgt im Betrieb der Dichtungsanordnung vorzugsweise mindestens ungefähr 5 bar, insbesondere mindestens ungefähr 10 bar. Auch bei solch hohen mittleren Differenzdrücken gewährleistet die erfindungsgemäße Dichtungsanordnung vorzugsweise eine zuverlässige Abdichtung zwischen den beiden Medienräumen, mit sehr geringen Leckage-Werten.

Durch Druckpulsationen kann der maximale Differenzdruck zwischen dem ersten Medienraum und dem zweiten Medienraum um bis zu ungefähr 15 bar über dem mittleren Differenzdruck liegen.

Vorzugsweise beträgt der maximale Differenzdruck zwischen den Medienräumen mindestens ungefähr 20 bar.

Mit einer Hochdruckpumpe wird beispielsweise zur Leistungssteigerung von Otto-Motoren der Kraftstoff (Benzin) direkt in die Zylinder des Verbrennungsmotors eingespritzt, ähnlich wie bei der Common-Rail-Technik für DieselMotoren. Zur Erzeugung des hierfür erforderlichen hohen Benzindruckes wird eine Kolben-Hochdruckpumpe verwendet. Die Kolben dieser Hochdruckpumpe werden von der Nockenwelle mit speziellen Nocken angetrieben und über Federelemente zurückgestellt. Zur Abdichtung der Benzinseite gegenüber der mit Motoröl gefüllten Nockenwellenseite kann die erfindungsgemäße Dichtungsanordnung verwendet werden.

Durch die geringen Benzin-Leckage-Werte der erfindungsgemäßen Dichtungsanordnung wird verhindert, dass zuviel Benzin in das Motoröl gelangt, was eine zum Motorausfall führende Ölverdünnung verursachen könnte.

Ebenso verhindert die erfindungsgemäße Dichtungsanordnung, dass zuviel Motoröl in das Benzin gelangt, was zu Filter- und Düsenverstopfungen und somit ebenfalls zum Motorausfall führen könnte.

Ferner ermöglicht es die erfindungsgemäße Dichtungsanordnung, nicht nur das unter Druck stehende Benzin abzudichten, sondern auch das nahezu drucklose Öl der Nockenwelle in effizienter Weise abzustreifen.

Durch die erhöhte Anzahl von Dichtlippen, welche zur Abdichtung an dem beweglichen Bauteil anliegen, wird auch der Dichtlippen- und Dichtkantenverschleiß verringert, so dass die erfindungsgemäße Dichtungsanordnung über einen längeren Zeitraum hinweg einsatzfähig ist.

Vorzugsweise weisen die erfindungsgemäße Hochdruckpumpe und/oder die erfindungsgemäßen Verwendungen einzelne oder mehrere der im Zusammenhang mit der erfindungsgemäßen Dichtungsanordnung beschriebenen Merkmale und/oder Vorteile auf.

Ferner können die erfindungsgemäße Dichtungsanordnung, die erfindungsgemäße Hochdruckpumpe und die erfindungsgemäßen Verwendungen einzelne oder mehrere der nachfolgend beschriebenen Merkmale und/oder Vorteile aufweisen:
Vorzugsweise ist eine unter einer Dichtlippe eines dynamischen Dichtabschnitts hindurchgeschleppte Leckage-Menge eines Mediums mittels eines an diese Dichtlippe angrenzenden Leckage-Speicherraums vollständig aufnehmbar.

Eine benachbarte Dichtlippe ist vorzugsweise in einem entsprechenden Abstand von der ersten Dichtlippe angeordnet. Ferner ist ein Leckage-Speicherraum zwischen den zwei Dichtlippen entsprechend groß dimensioniert.

Günstig kann es sein, wenn die Dichtungsanordnung voneinander verschieden ausgebildete, insbesondere unterschiedlich dimensionierte, dynamische Abdichtbereiche aufweist.

Vorteilhaft kann es sein, wenn die Dichtungsanordnung unterschiedliche Federelemente für die verschiedenen dynamischen Dichtabschnitte umfasst.

Vorzugsweise können bei weiter beabstandet voneinander angeordneten Dichtlippen vergrößerte Leckage-Speicherräume gebildet und optimale Dichtkantenwinkel (Winkel zwischen den Begrenzungsflächen und der Längsachse) und/oder Dichtkantenprofile vorgesehen sein.

Ein Profil einer Dichtkante kann beispielsweise an die Viskosität des abzudichtenden Mediums angepasst sein.

Beispielsweise kann bei einem dickflüssigeren Medium ein spitzes Dichtkantenprofil (V-Profil) verwendet werden, während bei einem dünnflüssigeren Medium ein rundes, abgerundetes oder abgeflachtes Dichtkantenprofil (beispielsweise ein U-Profil) vorgesehen ist. Hierdurch kann insbesondere eine an die Medienviskosität angepasste optimale Abstreifwirkung erzielt werden.

Vorzugsweise kann eine Schmierfilmdicke (Leckage-Filmdicke) zur Reduktion der Leckage-Menge verringert werden.

Ein minimaler Schmierfilm kann dabei vorzugsweise aufrechterhalten werden, insbesondere um einen Trockenlauf zu vermeiden und eine Reibung zwischen dem Dichtelement und dem beweglichen Bauteil zu minimieren.

Vorteilhaft kann es sein, wenn die Dichtungsanordnung einen dynamischen Dichtabschnitt zum Abdichten eines drucklosen Medienraums umfasst, wobei das Medium in dem drucklosen Medienraum beispielsweise ein dickflüssiges Medium, beispielsweise Öl, ist. Dieser dynamische Dichtabschnitt ist vorzugsweise mittels eines verstärkten Federelements an das bewegliche Bauteil anpressbar. Dichtkanten von Dichtlippen des dynamischen Dichtabschnitts zur Abdichtung dieses Medienraums sind beispielsweise spitz oder scharfkantig ausgebildet.

Alternativ oder ergänzend hierzu kann vorgesehen sein, dass die Dichtungsanordnung einen dynamischen Dichtabschnitt umfasst, welcher einen druckbeaufschlagten, das heißt unter Druck stehenden, Medienraum abdichtet. Das Medium in diesem Medienraum ist beispielsweise ein dünnflüssiges Medium, beispielsweise Kraftstoff. Vorzugsweise ist ein Federelement mit geringer Federstärke vorgesehen, mittels welchem der dynamische Dichtabschnitt an das bewegliche Bauteil anpressbar ist. Dichtkanten von Dichtlippen des dynamischen Dichtabschnitts sind vorzugsweise abgerundet oder abgeflacht ausgebildet.

Vorteilhaft kann es sein, wenn ein Leckage-Speicherraum auf einer Ölseite der Dichtungsanordnung größer ist als ein Leckage-Speicherraum auf einer Benzinseite (Kraftstoffseite) der Dichtungsanordnung.

Ein Radius einer abgerundeten Dichtkante kann beispielsweise höchstens ungefähr 0,3 mm, beispielsweise höchstens ungefähr 0,2 mm, insbesondere ungefähr 0,1 mm betragen. Alternativ oder ergänzend hierzu kann vorgesehen sein, dass der Radius mindestens ungefähr 0,05 mm, beispielsweise mindestens ungefähr 0,08 mm, beträgt.

Die konkave Einbuchtung in mindestens einer oder zwischen den mindestens zwei Begrenzungsflächen der Dichtlippen ist beispielsweise durch einen zusätzlichen Knickbereich oder Krümmungsbereich in mindestens einer oder zwischen den mindestens zwei Begrenzungsflächen gebildet. Insbesondere ist ein Knickbereich oder Krümmungsbereich vorgesehen, welcher sich von dem beweglichen Bauteil wegerstreckt.

Die Einbuchtung ist insbesondere eine Vertiefung in dem Dichtelement, welche sich weiter in das Dichtelement hineinerstreckt, als die zwei einander zugewandt angeordneten Begrenzungsflächen bis zu einer (gedachten) Schnittlinie derselben.

Vorteilhaft kann es sein, wenn die Dichtungsanordnung eine Kennzeichnung umfasst, mittels welcher eine bevorzugte Ausrichtung der Dichtungsanordnung für einen gerichteten Einbau derselben einfach erfassbar ist.

Weitere bevorzugte Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: eine schematische perspektivische Darstellung einer ersten Ausführungsform einer Dichtungsanordnung;
- Fig. 2: einen partiellen Längsschnitt durch die Dichtungsanordnung aus Fig. 1;
- Fig. 3: eine der Fig. 2 entsprechende schematische Darstellung eines Dichtelements der Dichtanordnung aus Fig. 2;
- Fig. 4: eine vergrößerte Darstellung des Bereichs IV in Fig. 3; und
- Fig. 5: eine der Fig. 2 entsprechende schematische Darstellung einer zweiten Ausführungsform einer Dichtungsanordnung zusammen mit einem durch die Dichtungsanordnung hindurchgeführten beweglichen Bauteil.

Gleiche oder funktional äquivalente Elemente sind in sämtlichen Figuren mit denselben Bezugszeichen versehen.

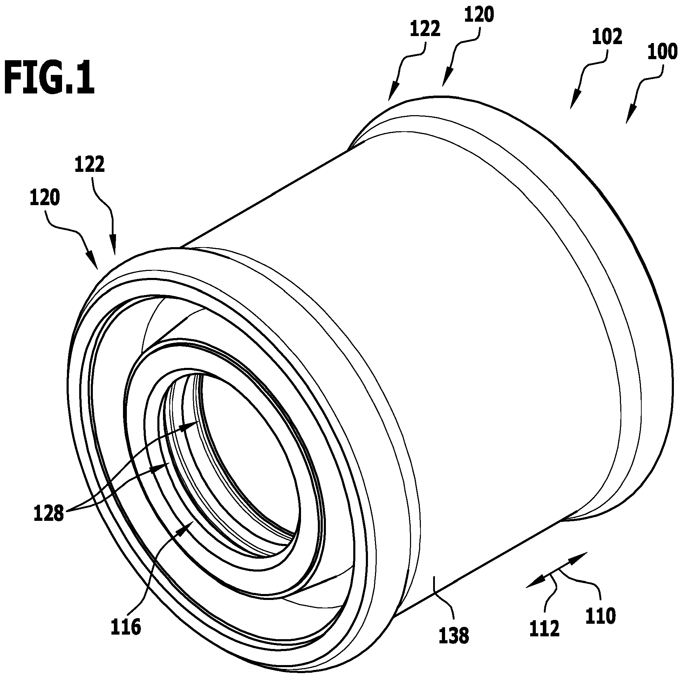

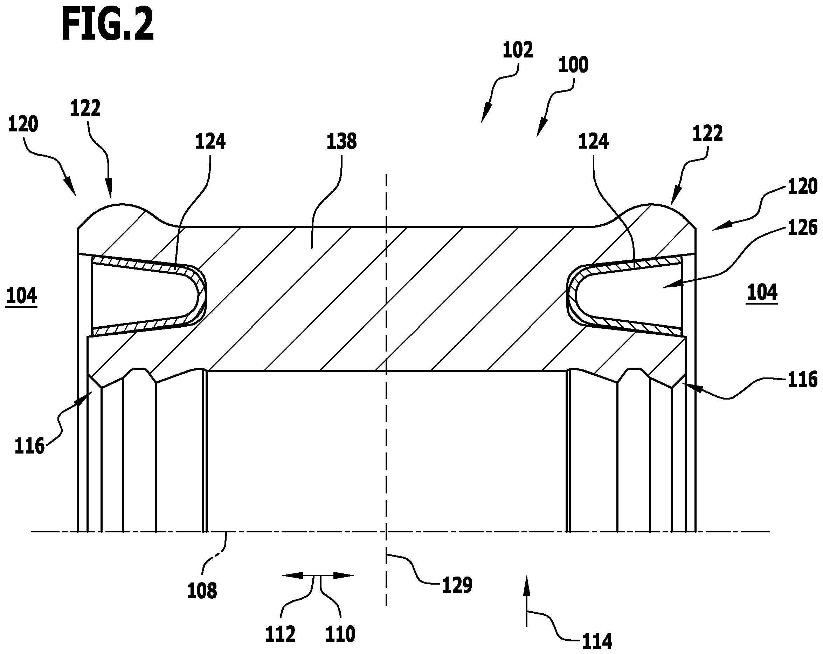

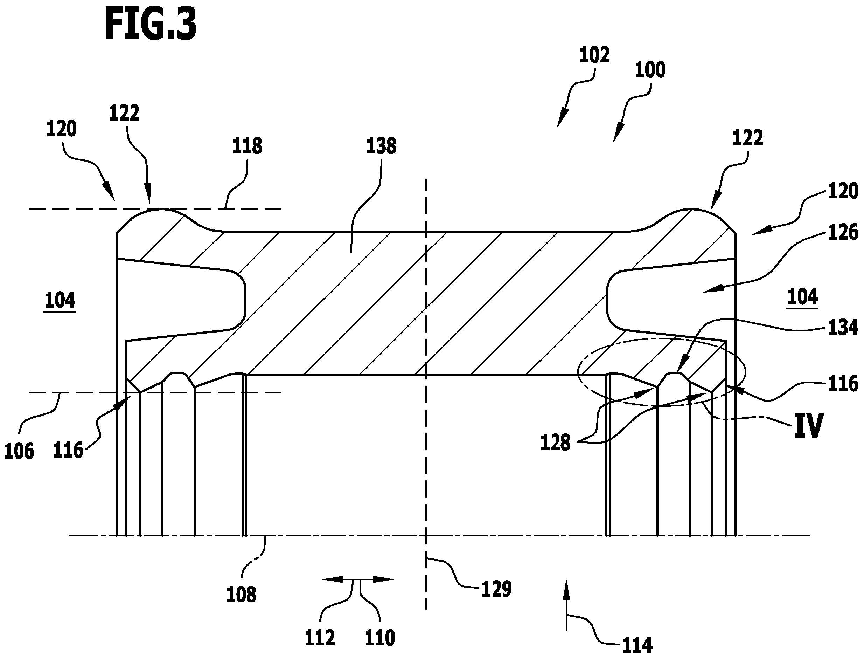

Eine in den Fig. 1 bis 4 dargestellte Ausführungsform einer als Ganzes mit 100 bezeichneten Dichtungsanordnung ist beispielsweise Bestandteil einer Hochdruckpumpe 102 und dient der Abdichtung zwischen zwei Medienräumen 104 im Bereich eines beweglichen Bauteils 106.

Das bewegliche Bauteil 106 kann beispielsweise ein Kolben der Hochdruckpumpe 102 sein.

Das bewegliche Bauteil 106 ist insbesondere durch die Dichtungsanordnung 100 hindurchgeführt.

Sowohl das bewegliche Bauteil 106 als auch die Dichtungsanordnung 100 sind dabei vorzugsweise rotationssymmetrisch um eine Symmetrieachse 108 ausgebildet.

Die Symmetrieachse 108 ist insbesondere parallel zu einer Längsachse 110 des beweglichen Bauteils 106 und der Dichtungsanordnung 100 ausgerichtet.

Die Dichtungsanordnung 100 und das bewegliche Bauteil 106 weisen im montierten Zustand eine gemeinsame Symmetrieachse 108 auf.

Die Längsachse 110 definiert vorzugsweise eine axiale Richtung 112.

Eine senkrecht zur axialen Richtung 112 ausgerichtete Richtung ist eine radiale Richtung 114.

Mittels der Dichtungsanordnung 100 sind vorzugsweise die Medienräume 104 in axialer Richtung 112 voneinander getrennt.

Die Dichtungsanordnung 100 grenzt dabei in radialer Richtung 114 nach innen gerichtet mittels zweier dynamischer Dichtabschnitte 116 an das bewegliche Bauteil 106 an.

In radialer Richtung 114 nach außen gerichtet grenzt die Dichtungsanordnung 100 an ein Gehäuse 118 der Hochdruckpumpe 102 an.

Die Dichtungsanordnung 100 ist im montierten Zustand derselben relativ zu dem Gehäuse 118 festgelegt, insbesondere drehfest mit dem Gehäuse 118 verbunden.

Zwei den beiden Medienräumen 104 zugeordnete Abdichtbereiche 120 der Dichtungsanordnung 100 umfassen somit zusätzlich zu den dynamischen Dichtabschnitten 116 noch zwei an dem Gehäuse 118 anliegende statische Dichtabschnitte 122.

Die dynamischen Dichtabschnitte 116 dienen der dynamischen Abdichtung zwischen der Dichtungsanordnung 100 und dem sich relativ zu der Dichtungsanordnung 100 bewegenden, insbesondere längs der axialen Richtung 112 verschieblichen, Bauteils 106.

Zur Erzielung einer erhöhten Dichtwirkung können ein oder mehrere Federelemente 124 der Dichtungsanordnung 100 vorgesehen sein.

Das eine oder die mehreren Federelemente 124 sind insbesondere in einer oder mehreren Federelementaufnahmen 126 anordenbar oder angeordnet.

Mittels des einen oder der mehreren Federelemente 124 sind insbesondere ein oder mehrere dynamische Dichtabschnitte 116 an das bewegliche Bauteil 106 anpressbar.

Alternativ oder ergänzend hierzu kann vorgesehen sein, dass mittels des einen oder der mehreren Federelemente 124 ein oder mehrere statische Dichtabschnitte 122 an ein Gehäuse 118 der Hochdruckpumpe 102 anpressbar sind.

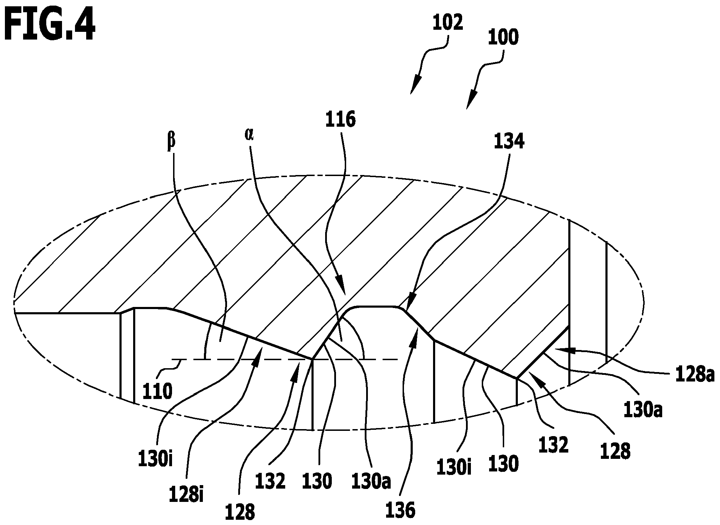

Wie insbesondere der vergrößerten Darstellung eines dynamischen Dichtabschnitts 116 in Fig. 4 zu entnehmen ist, umfasst jeder dynamische Dichtabschnitt 116 vorzugsweise mehrere Dichtlippen 128.

Jede Dichtlippe 128 ist vorzugsweise im Wesentlichen ringförmig und im Wesentlichen rotationssymmetrisch um die Symmetrieachse 108 ausgebildet.

Die Dichtlippen 128 sind dabei in unterschiedlichen Abständen von einer senkrecht zur Längsachse 110 der Dichtungsanordnung 100 verlaufenden Quermittelebene 129 der Dichtungsanordnung 100 angeordnet.

Eine näher an der Quermittelebene 129 angeordnete Dichtlippe 128 eines dynamischen Dichtabschnitts 116 wird dabei als axial innere Dichtlippe 128i bezeichnet. Eine weiter von der Quermittelebene 129 entfernt angeordnete Dichtlippe 128 ist eine axial äußere Dichtlippe 128a.

Die axial äußere Dichtlippe 128a ist demnach dem abzudichtenden Medienraum 104 zugewandt angeordnet.

Die axial innere Dichtlippe 128i ist auf einer dem Medienraum 104 abgewandten Seite der axial äußeren Dichtlippe 128a angeordnet.

Jede Dichtlippe 128 ist durch zwei im Wesentlichen konusförmige, insbesondere kegelstumpfmantelförmig ausgebildete, Begrenzungsflächen 130 gebildet.

Die Begrenzungsflächen 130 einer jeden Dichtlippe 128 grenzen dabei an einer Dichtkante 132 aneinander an.

Die Dichtkante 132 ist derjenige Abschnitt der Dichtlippe 128, welcher im Benutzungszustand der Dichtungsanordnung 100 an dem beweglichen Bauteil 106 zur Anlage kommt, allenfalls getrennt durch eine dünne Schmierfilmschicht.

Die Dichtkante 132 einer jeden Dichtlippe 128 ist bei der in den Fig. 1 bis 4 dargestellten Ausführungsform der Dichtungsanordnung 100 im Wesentlichen spitzzulaufend, das heißt, V-förmig, ausgebildet.

Jede der Dichtlippen 128 umfasst eine näher an der Quermittelebene 129 angeordnete axial innere Begrenzungsfläche 130i und eine weiter entfernt von der Quermittelebene 129 angeordnete axial äußere Begrenzungsfläche 130a.

Die axial äußere Begrenzungsfläche 130a schließt mit der Längsachse 110 einen Abstreifwinkel α (Alpha) ein.

Die axial innere Begrenzungsfläche 130i schließt mit der Längsachse 110 einen Rückförderwinkel β (Beta) ein.

Der Abstreifwinkel α ist größer gewählt als der Rückförderwinkel β. Auf diese Weise kann von dem Medienraum 104 in Richtung der Dichtungsanordnung 100 bewegtes Medium zunächst effizient von dem beweglichen Bauteil 106 abgestreift werden.

Ein dennoch unter einer Dichtlippe 128 hindurchgeschleppter Teil des Mediums wird aufgrund des kleineren Rückförderwinkels β mittels des beweglichen Bauteils 106 einfach unter der Dichtlippe 128 hindurch zurück in den Medienraum 104 geführt.

Zwischen den zwei Dichtlippen 128 des dynamischen Dichtabschnitts 116 ist ein Leckage-Speicherraum 134 gebildet.

Der Leckage-Speicherraum 134 dient insbesondere der Aufnahme von Medium aus dem Medienraum 104, welches unter der axial äußeren Dichtlippe 128a hindurchgeschleppt und an der axial inneren Dichtlippe 128i von dem beweglichen Bauteil 106 abgestreift wurde. Dieses Medium sammelt sich in dem Leckage-Speicherraum 134 und kann die Dichtfunktion der Dichtungsanordnung 100 beeinträchtigen.

Insbesondere kann ein gefüllter Leckage-Speicherraum 134 dazu führen, dass eine große Leckage-Menge unter beiden Dichtlippen 128a, 128i hindurchgeschleppt wird.

Für eine effiziente Dichtwirkung des dynamischen Dichtabschnitts 116 ist daher vorzugsweise ein vergrößerter Leckage-Speicherraum 134 vorgesehen.

Der Begriff "vergrößert" bezieht sich dabei insbesondere auf einen Leckage-Speicherraum 134, welcher bei herkömmlichen Dichtungsanordnungen 100 lediglich durch die zwei einander zugewandt angeordneten Begrenzungsflächen 130 der beiden Dichtlippen 128 gebildet ist.

Vorzugsweise ist bei einem vergrößerten Leckage-Speicherraum 134 eine Einbuchtung 136 in mindestens einer der Begrenzungsflächen 130 oder zwischen den beiden Begrenzungsflächen 130 vorgesehen.

Die Einbuchtung 136 ist insbesondere eine konkave Einbuchtung, welche sich ausgehend von einer oder beiden der Begrenzungsflächen 130 und/oder zwischen den beiden Begrenzungsflächen 130 in radialer Richtung 114 nach außen von dem Bauteil 106 wegerstreckt.

Der Leckage-Speicherraum 134 ist dabei insbesondere im Wesentlichen ringförmig ausgebildet und rotationssymmetrisch um die Symmetrieachse 108.

Die Einbuchtung 136, welche zumindest einen Teil des Leckage-Speicherraums 134 bildet, ermöglicht insbesondere eine sehr flache Ausbildung des Rückförderwinkels β, um eine zuverlässige Rückförderung von unter einer Dichtlippe 128 hindurchgeführtem Medium zurück in den Medienraum 104 zu gewährleisten.

Die vorstehend beschriebene Ausführungsform einer Dichtungsanordnung 100 funktioniert wie folgt:
Im Benutzungszustand der Dichtungsanordnung 100 wird das bewegliche Bauteil 106 längs der Längsachse 110 linear hin- und herbewegt.

An dem beweglichen Bauteil 106 anhaftendes Medium wird dabei vorzugsweise mittels der Dichtlippen 128 von dem beweglichen Bauteil 106 abgestreift, um einen unerwünschten Übertritt von Medien aus den Medienräumen 104 in den jeweils anderen Medienraum 104 zu verhindern.

Ein vollständiges Abstreifen kann dabei mittels der Dichtlippen 128 nicht gewährleistet werden und ist zudem aufgrund einer ansonst unerwünscht hohen Reibung zwischen der Dichtungsanordnung 100 und dem beweglichen Bauteil 106 auch unerwünscht.

Tatsächlich wird stets ein gewisser Schmierfilm aus Medium an dem beweglichen Bauteil 106 erhalten, welcher somit eine Leckage darstellt.

Mittels der dynamischen Dichtabschnitte 116 der Dichtungsanordnung 100 kann jedoch gewährleistet werden, dass allenfalls eine sehr geringe Leckage-Menge (Medienmenge) dauerhaft an beiden Dichtlippen 128 eines dynamischen Dichtabschnitts 116 vorbeigeführt wird.

Vorzugsweise wird durch die Formgebung der Dichtlippen 128 und den Leckage-Speicherraum 134 gewährleistet, dass eine an einer oder beiden Dichtlippen 128 vorbeigeschleppte Leckage-Menge durch die Bewegung des beweglichen Bauteils 106 stets auch wieder zurück in den Medienraum 104 gefördert wird.

Bei der in den Fig. 1 bis 4 dargestellten Ausführungsform der Dichtungsanordnung 100 sind zwei Federelemente 124 zur stärkeren Anpressung der Dichtabschnitte 116, 122 und somit zur Erhöhung der Abdichtwirkung vorgesehen.

Es kann jedoch auch vorgesehen sein, dass die Dichtungsanordnung 100 keine Federelemente 124 umfasst und somit lediglich ein, vorzugsweise einstückiges, Dichtelement 138 umfasst.

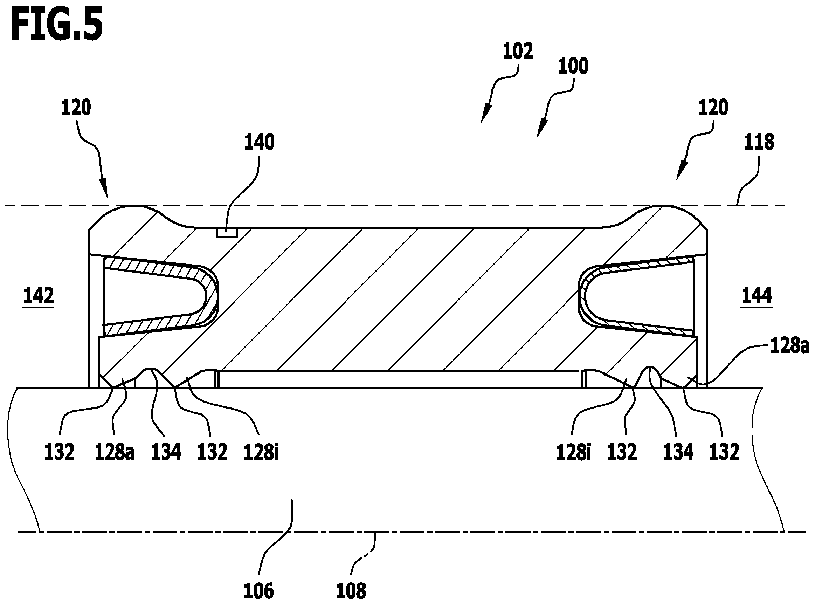

Eine in Fig. 5 dargestellte zweite Ausführungsform einer Dichtungsanordnung 100 unterscheidet sich von der in den Fig. 1 bis 4 dargestellten ersten Ausführungsform im Wesentlichen dadurch, dass die Federelemente 124 unterschiedlich dimensioniert sind und somit unterschiedliche Federstärken aufweisen.

Ferner sind vorzugsweise die Dichtkanten 132 der dynamischen Dichtabschnitte 116 unterschiedlich ausgebildet.

Die Dichtungsanordnung 100 weist somit eine bevorzugte Einbauausrichtung auf.

Mittels einer Kennzeichnung 140 der Dichtungsanordnung 100 kann die bevorzugte Ausrichtung einfach ermittelt werden, um eine zuverlässige Montage und Funktion der Dichtungsanordnung 100 gewährleisten zu können.

Bei der in Fig. 5 dargestellten Ausführungsform der Dichtungsanordnung 100 ist insbesondere vorgesehen, dass ein druckloser Ölaufnahmeraum 142 mittels der Dichtungsanordnung 100 von einem druckbeaufschlagten Kraftstoffaufnahmeraum 144 getrennt ist.

Der Abdichtbereich 120, welcher dem Ölaufnahmeraum 142 zugeordnet ist, umfasst dabei ein größer dimensioniertes Federelement 124, welches entsprechend eine größere Federkraft bietet. Zudem sind spitzzulaufende (V-förmige) Dichtkanten 132 vorgesehen, um das in dem Ölaufnahmeraum 142 angeordnete Medium, insbesondere Motoröl, zuverlässig in dem Ölaufnahmeraum 142 zu halten.

Ein dem Kraftstoffaufnahmeraum 144 zugeordneter Abdichtbereich 120 der Dichtungsanordnung 100 umfasst einen dynamischen Dichtabschnitt 116 mit vorzugsweise abgerundeten Dichtkanten 132. Ferner ist vorzugsweise ein schwächer dimensioniertes Federelement 124 vorgesehen, welches entsprechend eine geringere Federkraft aufbringt.

Der Leckage-Speicherraum 134 in dem dem Ölaufnahmeraum 142 zugeordneten Abdichtbereich 120 ist vorzugsweise größer dimensioniert als der Leckage-Speicherraum 134 in dem dem Kraftstoffaufnahmeraum 144 zugeordneten Abdichtbereich 120.

Insbesondere sind die Leckage-Speicherräume 134 so dimensioniert und die Dichtlippen 128 so angeordnet und ausgebildet, dass eine Leckage-Menge des jeweiligen Mediums, welche an einer axial äußeren Dichtlippe 128a bei einer Hin-Bewegung des beweglichen Bauteils 106 vorbeigeschleppt wurde, vollständig in dem Leckage-Speicherraum 134 aufgenommen und bei einer HerBewegung (Zurück-Bewegung) des beweglichen Bauteils 106 unter der axial äußeren Dichtlippe 128 hindurchgefördert und somit zurück in den Medienraum 104 geführt werden kann.

Die Gestaltung des jeweiligen Abdichtbereichs 120 ist dabei insbesondere an eine Viskosität des jeweiligen Mediums angepasst, um eine zuverlässige Abdichtwirkung zu erzielen.

Diesbezüglich und auch im Übrigen stimmt die in Fig. 5 dargestellte zweite Ausführungsform der Dichtungsanordnung 100 hinsichtlich Aufbau und Funktion mit der in den Fig. 1 bis 4 dargestellten ersten Ausführungsform überein, so dass auf deren vorstehende Beschreibung insoweit Bezug genommen wird.

## Patentansprüche

1. Dichtungsanordnung (100) zum Abdichten zwischen einem mit einem ersten Medium gefüllten ersten Medienraum (104) und einem mit einem zweiten Medium gefüllten zweiten Medienraum (104) im Bereich eines beweglichen Bauteils (106), das längs einer Längsachse (110) des beweglichen Bauteils (106) verschiebbar und/oder längs der Längsachse (110) drehbar durch die Dichtungsanordnung (100) hindurchgeführt oder hindurchführbar ist,
wobei die Dichtungsanordnung (100) ein Dichtelement (138) umfasst, welches mindestens einen an dem beweglichen Bauteil (106) anliegenden oder anlegbaren dynamischen Dichtabschnitt (116) aufweist, wobei der mindestens eine dynamische Dichtabschnitt (116) mindestens zwei Dichtlippen (128) aufweist, zwischen welchen ein Leckage-Speicherraum (134) gebildet ist,
wobei der Leckage-Speicherraum (134) abschnittsweise durch zwei einander zugewandt angeordnete Begrenzungsflächen (130) der Dichtlippen (128) begrenzt ist,
wobei der Leckage-Speicherraum (134) zumindest teilweise durch eine konkave Einbuchtung (136) in mindestens einer oder zwischen den mindestens zwei Begrenzungsflächen (130) der Dichtlippen (128) gebildet ist,
**dadurch gekennzeichnet,**
**dass** das Dichtelement (138) zwei dynamische Dichtabschnitte (116) umfasst, wobei beide dynamischen Dichtabschnitte (116) jeweils mindestens zwei Dichtlippen (128) aufweisen.

2. Dichtungsanordnung (100) nach Anspruch 1, **dadurch gekennzeichnet, dass** die konkave Einbuchtung (136) durch einen zusätzlichen Knickbereich oder Krümmungsbereich gebildet ist, welcher sich von dem beweglichen Bauteil (106) wegerstreckt.

3. Dichtungsanordnung (100) nach einem der Ansprüche 1 oder 2, **dadurch gekennzeichnet, dass** die konkave Einbuchtung (136) eine Vertiefung in dem Dichtelement (138) ist, welche sich weiter in das Dichtelement (138) hineinerstreckt, als die zwei einander zugewandt angeordneten Begrenzungsflächen (130) bis zu einer gedachten Schnittlinie derselben.

4. Dichtungsanordnung (100) nach einem der Ansprüche 1 bis 3, **dadurch gekennzeichnet, dass** eine oder beide der einander zugewandt angeordneten Begrenzungsflächen (130) der Dichtlippen (128) Kegelstumpfmantelflächen sind.

5. Dichtungsanordnung (100) nach einem der Ansprüche 1 bis 4, **dadurch gekennzeichnet, dass** die einander zugewandt angeordneten Begrenzungsflächen (130) voneinander verschiedene Winkel (α, β) mit einer Oberfläche des beweglichen Bauteils (106) und/oder mit der Längsachse (110) einschließen.

6. Dichtungsanordnung (100) nach einem der Ansprüche 1 bis 5, **dadurch gekennzeichnet, dass** eine axial innere Begrenzungsfläche (130i) einer axial äußeren Dichtlippe (128a) einen kleineren Winkel mit der Längsachse (110) einschließt als eine axial äußere Begrenzungsfläche (130a) einer axial inneren Dichtlippe (128i).

7. Dichtungsanordnung (100) nach einem der Ansprüche 1 bis 6, **dadurch gekennzeichnet, dass** eine axial innere Begrenzungsfläche (130i) einer Dichtlippe (128) einen kleineren Winkel mit der Längsachse (110) einschließt als eine axial äußere Begrenzungsfläche (130a) derselben Dichtlippe (128).

8. Dichtungsanordnung (100) nach einem der Ansprüche 1 bis 7, **dadurch gekennzeichnet, dass** die Einbuchtung (136) im Wesentlichen ringförmig ausgebildet und/oder im Wesentlichen rotationssymmetrisch um die Längsachse (110) ist.

9. Dichtungsanordnung (100) nach einem der Ansprüche 1 bis 8, **dadurch gekennzeichnet, dass** die Dichtungsanordnung (100) mehrere Leckage-Speicherräume (134) mit unterschiedlichen Volumina, insbesondere mehrere Leckage-Speicherräume (134) mit unterschiedlich dimensionierten Einbuchtungen (136), umfasst.

10. Dichtungsanordnung (100) nach einem der Ansprüche 1 bis 9, **dadurch gekennzeichnet, dass** das Dichtelement (138) einstückig ausgebildet ist.

11. Dichtungsanordnung (100) nach einem der Ansprüche 1 bis 10, **dadurch gekennzeichnet, dass** das Dichtelement (138) ein Kunststoffmaterial umfasst, insbesondere aus einem PTFE-Material gebildet ist.

12. Dichtungsanordnung (100) nach Anspruch 11, **dadurch gekennzeichnet, dass** das Dichtelement (138) aus einem Polytetrafluorethylen-Compound oder aus einem modifizierten Polytetrafluorethylen-Compound oder aus einem, insbesondere spritzgießbaren, Fluorthermoplasten oder aus einem, insbesondere spritzgießbaren, Fluorthermoplast-Compound gebildet ist.

13. Dichtungsanordnung (100) nach einem der Ansprüche 1 bis 12, **dadurch gekennzeichnet, dass** mindestens ein dynamischer Dichtabschnitt (116) des Dichtelements (138) mindestens einen Leckage-Speicherraum (134) aufweist, der zwischen zwei zueinander benachbarten Dichtlippen (128) des dynamischen Dichtabschnitts (116) ausgebildet ist.

14. Hochdruckpumpe (102), umfassend mindestens eine Dichtungsanordnung (100) nach einem der Ansprüche 1 bis 13.

15. Verwendung einer Hochdruckpumpe (102) nach Anspruch 14 zum Einspritzen eines Kraftstoffs in einen Verbrennungsmotor.

16. Verwendung einer Dichtungsanordnung (100), nach einem der Ansprüche 1 bis 13, zum Abdichten zwischen einem mit einem ersten Medium gefüllten ersten Medienraum (104) und einem mit einem zweiten Medium gefüllten zweiten Medienraum (104) im Bereich eines beweglichen Bauteils (106), wobei ein Volumen eines Leckage-Speicherraums (134) eines dynamischen Dichtabschnitts (116) der Dichtungsanordnung (100) und mindestens ein mittels des dynamischen Dichtabschnitts (116) abzudichtendes Medium so gewählt sind, dass das Volumen des Leckage-Speicherraums (134) größer ist als ein Volumen des Mediums, welches gebildet ist durch einen Hub des beweglichen Bauteils (106) multipliziert mit einer Querschnittsfläche eines mittels des Mediums an dem beweglichen Bauteil (106) gebildeten Schmierfilms.

## Claims

1. Sealing arrangement (100) for sealing between a first medium chamber (104) filled with a first medium and a second medium chamber (104) filled with a second medium, in the region of a movable component (106) which is displaceable along a longitudinal axis (110) of the movable component (106) and/or is rotatably guided or guidable through the sealing arrangement (100) along the longitudinal axis (110), wherein the sealing arrangement (100) comprises a sealing element (138) which comprises at least one dynamic sealing portion (116) which is placed or placeable on the movable component (106),
wherein the at least one dynamic sealing portion (116) comprises at least two sealing lips (128) between which a leakage reservoir (134) is formed,
wherein the leakage reservoir (134) is partially delimited by two boundary surfaces (130) of the sealing lips (128) arranged facing one another,
wherein the leakage reservoir (134) is formed at least partially by a concave recess (136) in at least one or between the at least two boundary surfaces (130) of the sealing lips (128),
**characterised in that**
the sealing element (138) comprises two dynamic sealing portions (116), wherein both dynamic sealing portions (116) each have at least two sealing lips (128).

2. Sealing arrangement (100) according to claim 1, **characterised in that** the concave recess (136) is formed by an additional sharp bend region or curvature region which extends away from the movable component (106).

3. Sealing arrangement (100) according to one of the claims 1 or 2, **characterised in that** the concave recess (136) is an indentation in the sealing element (138) which extends further into the sealing element (138) than the two boundary surfaces (130) arranged facing one another, as far as an imaginary intersection line thereof.

4. Sealing arrangement (100) according to one of the claims 1 to 3, **characterised in that** one or both of the boundary surfaces (130) of the sealing lips (128) facing one another are frusto-conical surfaces.

5. Sealing arrangement (100) according to one of the claims 1 to 4, **characterised in that** the boundary surfaces (130) arranged facing one another enclose mutually different angles (α, β) with a surface of the movable component (106) and/or with the longitudinal axis (110).

6. Sealing arrangement (100) according to one of the claims 1 to 5, **characterised in that** an axially inner boundary surface (130i) of an axially outer sealing lip (128a) encloses a smaller angle with the longitudinal axis (110) than an axially outer boundary surface (130a) of an axially inner sealing lip (128i).

7. Sealing arrangement (100) according to one of the claims 1 to 6, **characterised in that** an axially inner boundary surface (130i) of a sealing lip (128) encloses a smaller angle with the longitudinal axis (110) than an axially outer boundary surface (130a) of the same sealing lip (128).

8. Sealing arrangement (100) according to one of the claims 1 to 7, **characterised in that** the recess (136) is formed substantially annular and/or substantially rotationally symmetrical about the longitudinal axis (110).

9. Sealing arrangement (100) according to one of the claims 1 to 8, **characterised in that** the sealing arrangement (100) comprises a plurality of leakage reservoirs (134) with different volumes, in particular a plurality of leakage reservoirs (134) with differently dimensioned recesses (136).

10. Sealing arrangement (100) according to one of the claims 1 to 9, **characterised in that** the sealing element (138) is configured as a single piece.

11. Sealing arrangement (100) according to one of the claims 1 to 10, **characterised in that** the sealing element (138) comprises a plastics material, in particular is made of a PTFE material.

12. Sealing arrangement (100) according to claim 11, **characterised in that** the sealing element (138) is made of a polytetrafluoroethylene compound or a modified polytetrafluoroethylene compound or an, in particular injection-mouldable, fluoropolymer thermoplastics or an, in particular injection mouldable, fluoropolymer thermoplastics compound.

13. Sealing arrangement (100) according to one of the claims 1 to 12, **characterised in that** at least one dynamic sealing portion (116) of the sealing element (138) comprises at least one leakage reservoir (134) which is formed between two mutually adjacent sealing lips (128) of the dynamic sealing portion (116).

14. High pressure pump (102) comprising at least one sealing arrangement (100) according to one of the claims 1 to 13.

15. Use of a high pressure pump (102) according to claim 14 for injecting a fuel into an internal combustion engine.

16. Use of a sealing arrangement (100) according to one of the claims 1 to 13, for sealing between a first medium chamber (104) filled with a first medium and a second medium chamber (104) filled with a second medium, in the region of a movable component (106), wherein a volume of a leakage reservoir (134) of a dynamic sealing portion (116) of the sealing arrangement (100) and at least one medium to be sealed by means of the dynamic sealing portion (116) are selected so that the volume of the leakage reservoir (134) is greater than a volume of the medium which is formed by a stroke of the movable component (106) multiplied by a cross-sectional area of a lubrication film formed by means of the medium on the movable component (106).

## Revendications

1. Ensemble d'étanchéité (100) servant réaliser une étanchéification entre une première chambre de fluide (104) remplie d'un premier fluide et une seconde chambre de fluide (104) remplie d'un second fluide dans la zone d'un composant (106) mobile, qui est guidé ou peut être guidé à travers l'ensemble d'étanchéité (100) de part en part de manière à pouvoir coulisser le long d'un axe longitudinal (110) du composant (106) mobile et/ou de manière à pouvoir tourner le long de l'axe longitudinal (110),
dans lequel l'ensemble d'étanchéité (100) comprend un élément étanche (138), lequel présente au moins une section étanche (116) dynamique placée ou pouvant être placée contre le composant (106) mobile, dans lequel l'au moins une section étanche (116) dynamique présente au moins deux lèvres étanches (128), entre lesquelles une chambre de stockage destinée aux fuites (134) est formée,
dans lequel la chambre de stockage destinée aux fuites (134) est délimitée par endroits par deux surfaces de délimitation (130), disposées de manière tournée l'une vers l'autre, des lèvres étanches (128),
dans lequel la chambre de stockage destinée aux fuites (134) est formée au moins en partie par une dentelure (136) concave dans au moins une ou entre les au moins deux surfaces de délimitation (130) des lèvres étanches (128),
**caractérisé en ce**
**que** l'élément étanche (138) comprend deux sections étanches (116) dynamiques, dans lequel les deux sections étanches (116) dynamiques présentent respectivement au moins deux lèvres étanches (128).

2. Ensemble d'étanchéité (100) selon la revendication 1, **caractérisé en ce que** la dentelure (136) concave est formée par une zone de pliage ou une zone d'incurvation supplémentaire, laquelle s'étend de manière à s'éloigner du composant (106) mobile.

3. Ensemble d'étanchéité (100) selon l'une quelconque des revendications 1 ou 2, **caractérisé en ce que** la dentelure (136) concave est un renfoncement dans l'élément étanche (138), lequel s'étend plus loin dans l'élément étanche (138) que les deux surfaces de délimitation (130) disposées de manière tournée l'une vers l'autre jusqu'à une ligne d'intersection imaginaire de celles-ci.

4. Ensemble d'étanchéité (100) selon l'une quelconque des revendications 1 à 3, **caractérisé en ce qu'**une ou les deux surfaces de délimitation (130), disposées de manière tournée l'une vers l'autre, des lèvres étanches (128) sont des surfaces enveloppantes tronconiques.

5. Ensemble d'étanchéité (100) selon l'une quelconque des revendications 1 à 4, **caractérisé en ce que** les surfaces de délimitation (130) disposées de manière tournée l'une vers l'autre forment des angles (α, β) différents les uns des autres avec une surface du composant (106) mobile et/ou avec l'axe longitudinal (110).

6. Ensemble d'étanchéité (100) selon l'une quelconque des revendications 1 à 5, **caractérisé en ce qu'**une surface de délimitation axialement intérieure (130i) d'une lèvre étanche axialement extérieure (128a) forme un angle plus petit avec l'axe longitudinal (110) qu'une surface de délimitation axialement extérieure (130a) d'une lèvre étanche axialement intérieure (128i).

7. Ensemble d'étanchéité (100) selon l'une quelconque des revendications 1 à 6, **caractérisé en ce qu'**une surface de délimitation axialement intérieure (130i) d'une lèvre étanche (128) forme un angle plus petit avec l'axe longitudinal (110) qu'une surface de délimitation axialement extérieure (130a) de cette même lèvre étanche (128).

8. Ensemble d'étanchéité (100) selon l'une quelconque des revendications 1 à 7, **caractérisé en ce que** la dentelure (136) est réalisée de manière sensiblement annulaire et/ou est sensiblement symétrique en rotation autour de l'axe longitudinal (110).

9. Ensemble d'étanchéité (100) selon l'une quelconque des revendications 1 à 8, **caractérisé en ce que** l'ensemble d'étanchéité (100) comprend plusieurs chambres de stockage destinées aux fuites (134) avec des volumes différents, en particulier plusieurs chambres de stockage destinées aux fuites (134) avec des indentations (136) de dimensions différentes.

10. Ensemble d'étanchéité (100) selon l'une quelconque des revendications 1 à 9, **caractérisé en ce que** l'élément étanche (138) est réalisé d'un seul tenant.

11. Ensemble d'étanchéité (100) selon l'une quelconque des revendications 1 à 10, **caractérisé en ce que** l'élément étanche (138) comprend un matériau en matière plastique, en particulier est formé à partir d'un matériau en PTFE.

12. Ensemble d'étanchéité (100) selon la revendication 11, **caractérisé en ce que** l'élément étanche (138) est formé à partir d'un composé à base de polytétrafluoroéthylène ou à partir d'un composé modifié à base de polytétrafluoroéthylène ou à partir d'une matière thermoplastique fluorée en particulier pouvant être moulée par injection ou à partir d'un composé à base de matière thermoplastique fluorée en particulier pouvant être moulé par injection.

13. Ensemble d'étanchéité (100) selon l'une quelconque des revendications 1 à 12, **caractérisé en ce qu'**au moins une section étanche (116) dynamique de l'élément étanche (138) présente au moins une chambre de stockage destinée aux fuites (134), qui est réalisée entre deux lèvres étanches (128) adjacentes l'une à l'autre de la section étanche (116) dynamique.

14. Pompe à haute pression (102), comprenant au moins un ensemble d'étanchéité (100) selon l'une quelconque des revendications 1 à 13.

15. Utilisation d'une pompe à haute pression (102) selon la revendication 14 servant à injecter un carburant dans un moteur à combustion interne.

16. Utilisation d'un ensemble d'étanchéité (100) selon l'une quelconque des revendications 1 à 13, pour réaliser une étanchéification entre une première chambre de fluide (104) remplie d'un premier fluide et d'une seconde chambre de fluide (104) remplie d'un second fluide dans la zone d'un composant (106) mobile, dans laquelle un volume d'une chambre de stockage destinée aux fuites (134) d'une section étanche (116) dynamique de l'ensemble d'étanchéité (100) et au moins un fluide à étanchéifier au moyen de la section étanche (116) dynamique sont choisis de telle sorte que le volume de la chambre de stockage destinée aux fuites (134) est plus grand qu'un volume du fluide, lequel est formé par une course du composant (106) mobile multipliée par une surface en coupe transversale d'un film lubrifiant formé au moyen du fluide au niveau du composant (106) mobile.
